# EUROPÄISCHE PATENTSCHRIFT

(11) **EP 1 084 357 B1**
(45) Veröffentlichungstag und Bekanntmachung des Hinweises auf die Patenterteilung: **13.08.2003**
(21) Anmeldenummer: 99936414.4
(22) Anmeldetag: 05.06.1999
(51) Int. Cl.: F16K 1/00

(54) **DOPPELSICHERHEITSVENTIL**
DUAL-SAFETY VALVE
DOUBLE VANNE DE SECURITE

(30) Priorität: 12.06.1998 DE 19826074
(43) Veröffentlichungstag der Anmeldung: 21.03.2001
(73) Patentinhaber: Karl Dungs GmbH & Co., 73660 Urbach (DE)
(72) Erfinder: WÖRNER, Jürgen, D-73547 Weitmars (DE)
(74) Vertreter: Rüger, Barthelt & Abel Patentanwälte
(86) Internationale Anmeldenummer: DE9901647
(87) Internationale Veröffentlichungsnummer: WO99064769

(56) Entgegenhaltungen:
- DE-A- 2 510 788
- FR-A- 1 327 130
- FR-A- 1 496 822
- US-A- 5 836 352
- PATENT ABSTRACTS OF JAPAN vol. 007, no. 250 (M-254), 8. November 1983 (1983-11-08) & JP 58 134284 A (ISHIKAWAJIMA HARIMA JUKOGYO KK), 10. August 1983 (1983-08-10)

## Beschreibung

Die Erfindung betrifft ein Doppelsicherheitsventil mit zwei in einem Gehäuse untergebrachten Ventilen, deren beide axial verschiebbaren Ventilteller koaxial zueinander angeordnet sind und jeweils durch eine axiale Bewegung in Öffnungsrichtung gegen den Federdruck einer ersten bzw. einer zweiten Schließfeder von ihrem jeweiligen Ventilsitz abheben, wobei die dem in Durchflußrichtung des Doppelsicherheitsmagnetventils zweiten Ventilteller zugeordnete zweite Schließfeder am Gehäuse abgestützt ist und wobei der erste Ventilteller in Öffnungsrichtung mit dem zweiten Ventilteller bewegungsgekoppelt ist, der als Stellelement einen Magnetanker aufweist.

Ein derartiges Doppelsicherheitsventil ist zum Beispiel durch die DE-A-195 25 384 bekanntgeworden. Solche Doppelsicherheitsventile werden insbesondere als Sicherheitsmagnetventile an der Gas-Eingangsseite von Gaswärmeerzeugern eingesetzt.

Bei dem aus der DE-A-195 25 384 bekannten Doppelsicherheitsventil sind die beiden Ventilteller axial übereinander in einem Gehäuse angeordnet und wirken jeweils mit einem eigenen Ventilsitz zusammen. Die Ventilteller sind jeweils Teil zweier voneinander unabhängiger Stellelemente, von denen das zweite im ersten axial verschiebbar geführt ist. Die beiden Stellelemente werden durch einen gemeinsamen Magnetantrieb jeweils gegen die Wirkung.einer Schließfeder geöffnet, wobei bei Abschalten des Magneten die beiden Schließfedern den Schließhub der beiden Ventilteller voneinander vollständig unabhängig durchführen. Damit kann die Sicherheitsanforderung an Gassicherheitsventile erfüllt werden.

Obwohl mit dem bekannten Doppelsicherheitsventil bereits eine kompakte Bauweise und damit einerseits eine platzsparende, andererseits eine wesentlich preiswerter herzustellende Einheit ermöglicht worden ist, ist aufgrund der jeweils unabhängig voneinander wirkenden Schließfedern die Möglichkeiten bei der Kraft- bzw. Federbeaufschlagung ziemlich begrenzt.

Weiterhin ist aus der FR-A-1 327 130 ein Sicherheitsventil am Verbindungsende eines Gasrohres bekannt. Der im Gasrohr herrschende Gasdruck wird über zwei Ventilkörper abgedichtet, die jeweils mit einem eigenen Ventilsitz zusammenwirken. Die Schließfeder des ersten Ventilkörpers ist am Gehäuse und die Schließfeder des zweiten Ventilkörpers am ersten Ventilkörper abgestützt. Beim Einstecken eines zu verbindenden Rohres in das Verbindungsende wird das Rohr zunächst über eine Dichtung im Verbindungsende abgedichtet und dann der zweite Ventilkörper in Einsteckrichtung verschoben, so dass der Ventilsitz geöffnet wird. Beim weiteren Einführen des Rohres nimmt der zweite Ventilkörper den ersten Ventilkörper in Einführrichtung mit, so dass auch der erste Ventilkörper von seinem Ventilsitz abhebt und somit das unter Druck stehende Gas in die angeschlossene Leitung strömen kann.

Es ist daher die Aufgabe der Erfindung, ein Doppelsicherheitsventil der eingangs genannten Art derart weiterzubilden, dass einerseits bei der Federauslegung eine größere Variationsmöglichkeit und andererseits eine noch kompaktere Bauweise erreicht werden kann.

Erfindungsgemäß wird diese Aufgabe auf ebenso überraschend einfache wie wirkungsvolle Art und Weise dadurch gelöst, dass die erste Schließfeder am zweiten Ventilteller oder am Magnetanker abgestützt ist und dass der Magnetanker innerhalb eines Führungselements des ersten Ventiltellers axial verschiebbar geführt ist.

Diese gegenseitige Abstützung der beiden Schließfedern ermöglicht eine Vielzahl von konstruktiven Möglichkeiten bei der Federauslegung oder bei der Kraftbeaufschlagung. Im geschlossenen Zustand des Doppelsicherheitsventils bringt jeweils die zweite Schließfeder die Kraft zum Schließen beider Ventilteller bzw. Ventile auf. Dies bedeutet, daß die zweite Schließfeder für den zweiten Ventilteller ungefähr doppelt so stark sein muß, da sich die beiden Schließfedern gegenseitig abstützen. Auf eine separate Führung des zweiten Ventiltellers bzw. des Magnetankers kann verzichtet werden, da der Magnetanker innerhalb eines Führungselements des ersten Ventiltellers axial verschiebbar geführt ist.

In einer vorteilhaften Weiterbildung dieser Ausführungsform ist der erste Ventilteller auf dem zweiten Ventilteller oder auf dem Magnetanker axial verschiebbar geführt. Dabei ist in einer Ausgestaltung dieser Weiterbildung vorgesehen, daß der erste Ventilteller gegenüber dem zweiten Ventilteller z.B. über eine O-Ring oder einen Lippendichtring abgedichtet ist.

Von besonderem Vorteil ist es, wenn der erste Ventilteller mit dem zweiten Ventilteller in Öffnungsrichtung bewegungsgekoppelt ist. Dadurch wird mit dem zweiten Ventilteller gleichzeitig auch der erste Ventilteller vom jeweiligen Ventilsitz abgehoben. In Schließrichtung sind beide Ventilteller hingegen nicht bewegungsgekoppelt, damit sie vollständig voneinander unabhängig ihren Schließhub durchführen können. Dazu kann z.B. der erste Ventilteller oder dessen Stellelement den zweiten Ventilteller oder den Magnetanker in Öffnungsrichtung hinter- oder übergreifen. Der erste Ventilteller wird dann nach einem Relativhub von beispielsweise ca. 1 mm vom zweiten Ventilteller in Öffnungsrichtung mitgenommen. Im Gegensatz zu dem aus der DE-A-195 25 384 bekannten Doppelsicherheitsventil, bei dem der erste Ventilteller, vom Magnetanker radial beabstandet, durch sein als Hohlanker ausgebildetes Stellelement geführt ist, ermöglicht diese Weiterbildung eine geringere Baugröße und zudem eine Vielzahl von konstruktiven Möglichkeiten, insbesondere bei der Federauslegung oder bei der Kraftbeaufschlagung. Die zweite Schließfeder kann z.B. zwischen den beiden Stellelementen, vorzugsweise in einem Ringspalt, oder in einer in Öffnungsrichtung offenen Öffnung des Magnetankers angeordnet sein.

Bei ganz besonders bevorzugten Ausführungsformen der Erfindung umgibt der erste Ventilteller den zweiten Ventilteller. Von besonderem Vorteil ist dabei, wenn die Ventilsitze der beiden Ventilteller zu einem gemeinsamen Ventilsitz zusammengefaßt sind, der die einzige Ventilöffnung umgibt. Im Gegensatz zu dem aus der DE-A-195 25 384 bekannten Doppelsicherheitsventil müssen nicht mehr zwei Ventilsitze mit hohem Zeit- und Arbeitsaufwand bearbeitet werden, sondern nur ein einziger Ventilsitz. Die Montage des Gerätes wird einfacher, da die Teile nicht mehr an zwei Sitze herangeführt werden müssen und ein kleineres Gerät besser zu handhaben ist.

Um das Doppelsicherheitsventil mit besonders geringen Herstellungskosten fertigen zu können, ist das Gehäuse der beiden Ventile vorzugsweise als Druckgußteil oder durch ein Strangpreßprofil gebildet.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigt:
- Fig. 1: eine erste Ausführungsform des erfindungsgemäßen Doppelsicherheitsventils in einem Längsschnitt;
- Fig. 2: eine vergrößerte Ansicht des Doppelsicherheitsventils der Fig. 1 im Bereich seiner Ventilöffnung entsprechend dem Ausschnitt II;
- Fig. 3: in einer der Fig. 2 entsprechenden vergrößerten Ansicht eine zweite Ausführungsform des erfindungsgemäßen Doppelsicherheitsventils, wobei die zweite (innere) Schließfeder am Boden des ersten (äußeren) Stellelements abgestützt ist; und
- Fig. 4: in einer der Fig. 2 entsprechenden vergrößerten Ansicht eine dritte Ausführungsform des erfindungsgemäßen Doppelsicherheitsventils, wobei die erste (äußere) Schließfeder am zweiten (inneren) Stellelement und am ersten (äußeren) Ventilteller abgestützt ist.

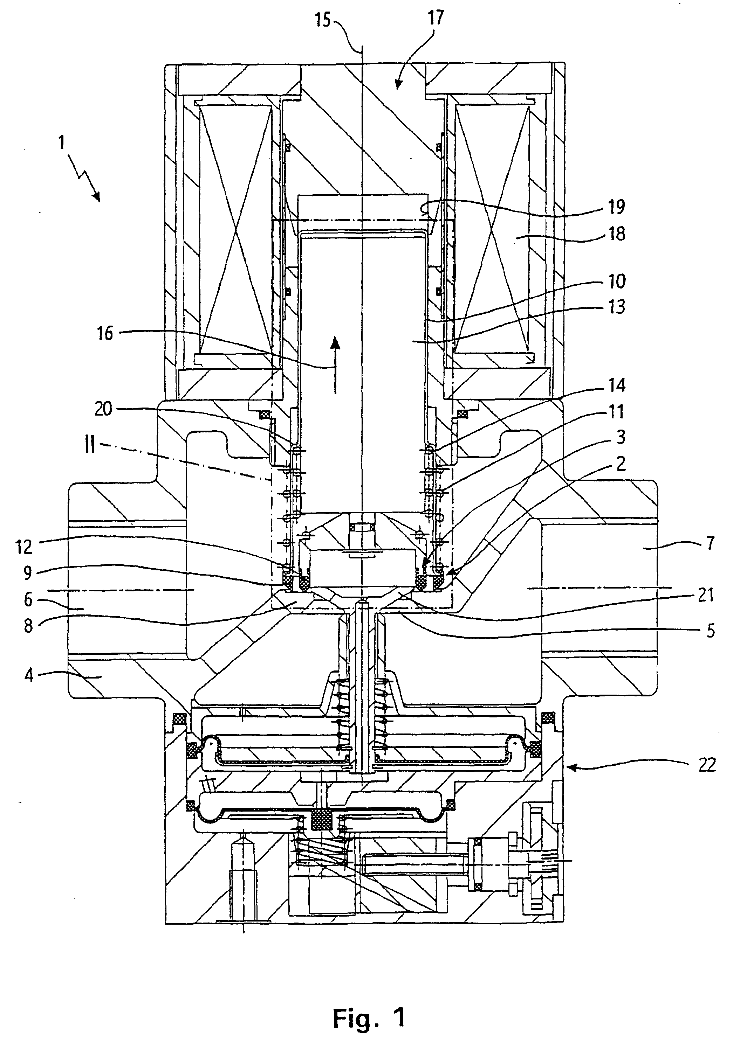

In Fig. 1 ist mit **1** ein Doppelsicherheitsventil bezeichnet, dessen zwei in Serie geschalteten Ventile **2** und **3** in einem gemeinsamen Gehäuse **4** untergebracht sind. Dieses Gehäuse 4 ist durch eine Ventilöffnung **5** in einen Gaseintrittsraum **6** und einen Gasaustrittsraum **7** aufgegliedert, wobei die Ventilöffnung **5** von einem Ventilsitz **8** umgeben ist.

Das eingangsseitige erste (äußere) Ventil 2 besteht aus einem ringförmigen ersten (äußeren) Ventilteller **9**, einem mit dem Ventilteller 9 verbundenen Stellelement (Hohlanker oder Hülse) **10** und einer ersten (äußeren) Schließfeder **11.** Das ausgangsseitige zweite (innere) Ventil 3 besteht aus einem ringförmigen ersten (inneren) Ventilteller **12**, einem mit diesem Ventilteller 12 verbundenen Magnetanker **13** und einer zweiten (inneren) Schließfeder **14**.

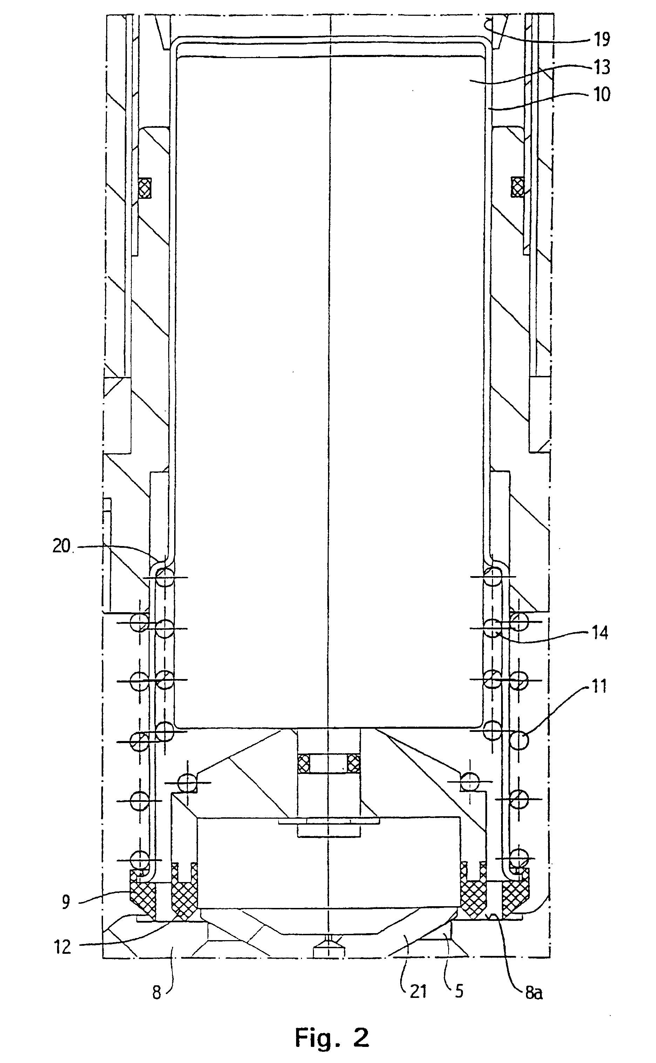

Die beiden Ventile 2, 3 bzw. ihre Ventilteller 9, 12 sind bezüglich einer gemeinsamen Achse **15** koaxial zueinander angeordnet, wobei der äußere Ventilteller 9 den inneren Ventilteller 12 ringförmig umgibt. Der Ventilsitz 8 dient mit seiner Anlagefläche **8a** (Fig. 2) als gemeinsamer Ventilsitz für beide Ventilteller 9, 12, die jeweils durch eine axiale Bewegung in Öffnungsrichtung **16** vom gemeinsamen Ventilsitz 8 abheben. Zum Öffnen der beiden Ventile 2, 3 dient ein gemeinsamer Magnetantrieb **17** mit einer Magnetspule **18** und einer Führungsöffnung **19**, in welcher das Stellelement 10 axial verschiebbar geführt ist. Der Magnetanker 13 ist seinerseits im Stellelement 10 axial verschiebbar geführt, wobei das topfförmig ausgebildete Stellelement 10 den Magnetanker 13 in Öffnungsrichtung 16 hintergreift und damit mit dem Magnetanker 13 in Öffnungsrichtung 16 bewegungsgekoppelt ist.

Die äußere Schließfeder 11 ist am Gehäuse 4 abstützt, während die innere Schließfeder 14 innen im Stellelement 10 an einer Umfangsschulter **20** abgestützt ist. Im dargestellten geschlossenen Zustand des Doppelsicherheitsventils 1 bringt die äußere Schließfeder 11 daher die Kraft zum Schließen beider Ventilteller 9, 12 bzw. beider Ventile 2, 3 auf. Beide Ventile deshalb, da sich die innere Schließfeder 14 gegen die äußere Schließfeder 11 abstützt und diese dadurch entlastet wird.

Bei Erregung der Magnetspule 18 entstehen magnetische Kraftlinien, die den Magnetanker 13 zusammen mit dem inneren Ventilteller 12 in Öffnungsrichtung 16 anziehen. Durch die Bewegungskopplung wird mit dem inneren Ventilteller 12 gleichzeitig auch der äußere Ventilteller 9 vom gemeinsamen Ventilsitz 8 abgehoben. Nach Abschalten der Magnetspule 18 bewirken die Schließfedern 11, 14 für jedes Ventil 2, 3 ein voneinander unabhängiges Schließen. Die Kraft der inneren Schließfeder 14 schließt den inneren Ventilteller 12 bzw. das innere Ventil 3.

Für den Fall, daß das äußere Ventil 2 nicht schließt, z.B. weil das Stellelement 10 in der Führungsöffnung 19 verklemmt ist, ist die innere Schließfeder 14 so ausgelegt, daß trotzdem noch genug Kraft vorhanden ist, auch in diesem Fall den inneren Ventilteller 12 bzw. das innere Ventil 3 zu schließen. Dies bedeutet, daß das innere Ventil 3 schließt, wenn das äußere Ventil 2 schließt (Hub des inneren Ventiltellers 12 relativ zum äußeren Ventilteller 9: 1 mm) und wenn das äußere Ventil 2 aufgrund einer Fehlfunktion nicht schließen sollte (Hub des inneren Ventiltellers 12 relativ zum äußeren Ventilteller 9: Nennhub + 1 mm). Zum Öffnen der beiden Ventile 2, 3 ist gegenüber bekannten Doppelsicherheitsventilen mit axial hintereinander angeordneten Ventilen trotz der stärkeren äußeren Schließfeder 11 kein stärker Magnet erforderlich, da die äußere Schließfeder 11, wie oben beschrieben, von der inneren Schließfeder 14 entlastet wird.

Um den Durchfluß durch die Ventilöffnung 5 zu regeln, ist ein im Querschnitt Y-förmiges Stellelement **21** vorgesehen, welches die Ventilöffnung 5 durchgreift und axial verschiebbar ist. Mittels eines an sich bekannten Durchfluß-Reglers **22** wird das Stellelement 21 entsprechend einem im Gasaustrittraum 7 gewünschten Ausgangsdruck verstellt. In seiner in Fig. 2 gezeigten geschlossenen Stellung liegt das. Stellelement 21 mit seinem freien tellerförmigen Ende ebenfalls an der flachen Anlagefläche 8a des gemeinsamen Ventilsitzes 8 an, wobei der Durchmesser des tellerförmigen Endes größer als der Durchmesser der Ventilöffnung 5 ist.

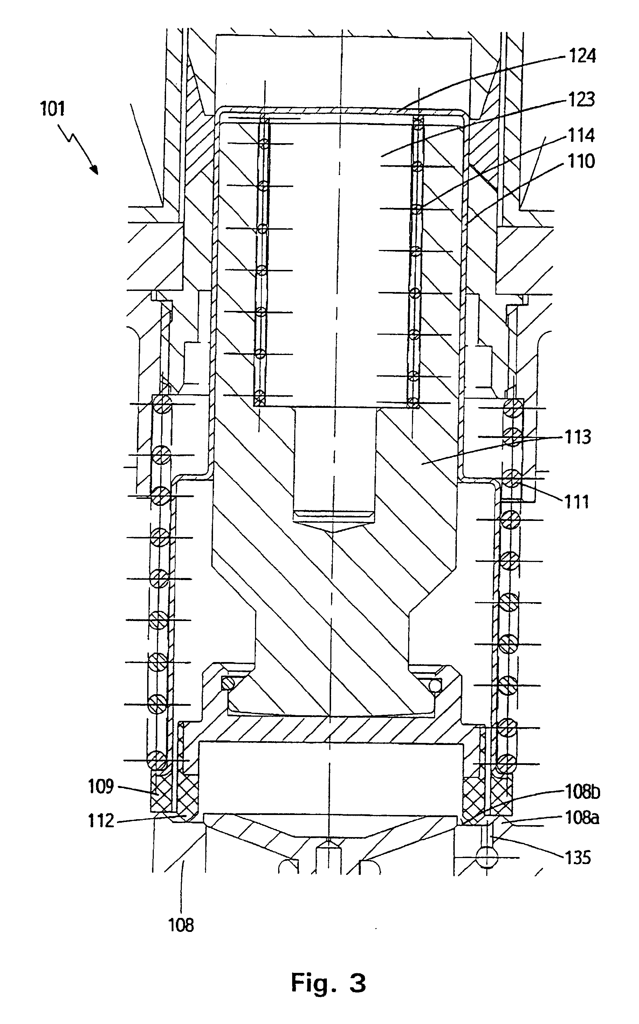

Gegenüber dieser ersten Ausführungsform unterscheidet sich das in Fig. 3 gezeigte Doppelsicherheitsventil **101** dadurch, daß die innere Schließfeder **114** innerhalb einer Öffnung (Sackbohrung) **123** im Magnetanker **113** untergebracht ist und sich einenends am Magnetanker 113 und anderenends am Boden **124** des topfförmigen Stellelements **110** abstützt. Durch diese Anordnung ergeben sich viele Möglichkeiten für die Federauslegung. Der Vorteil der abhängig abgestützten Schließfedern **111** und 114 besteht darin, daß im Fall eines Verklemmens des Magnetankers 113 im Stellelement 110 die starke äußere Schließfeder 111, die bisher die Schließkraft für die beiden Ventilteller **109, 112** gespeichert hat, den verbleibenden intakten äußeren Ventilteller 109 schließt.

Bei dieser Ausführungsform weist der gemeinsame Ventilsitz **108** keine gemeinsame flache Anlagefläche für beide Ventilteller 109 und 112 auf, sondern die beiden Anlageflächen **108a** und **108b** sind axial versetzt zueinander angeordnet. Die äußere Anlagefläche 108a ist spitz und das mit dieser Anlagefläche 108a zusammenwirkende elastomere Dichtungsmittel des äußeren Ventiltellers 109 flach ausgebildet. Hingegen ist die innere Anlagefläche 108b, die gleichzeitig als Anlagefläche für das Stellelement 21 dient, flach und das mit dieser Anlagefläche 108b zusammenwirkende elastomere Dichtungsmittel des inneren Ventiltellers 112 spitz ausgebildet. Weiterhin ist am gemeinsamen Ventilsitz 108 eine Dichtigkeitsprüföffnung **135** vorgesehen, die in den Ringraum zwischen beide Ventilteller 109, 112 führt, so daß eine Dichtheitsprüfung des Doppelsitzventils 101 möglich ist.

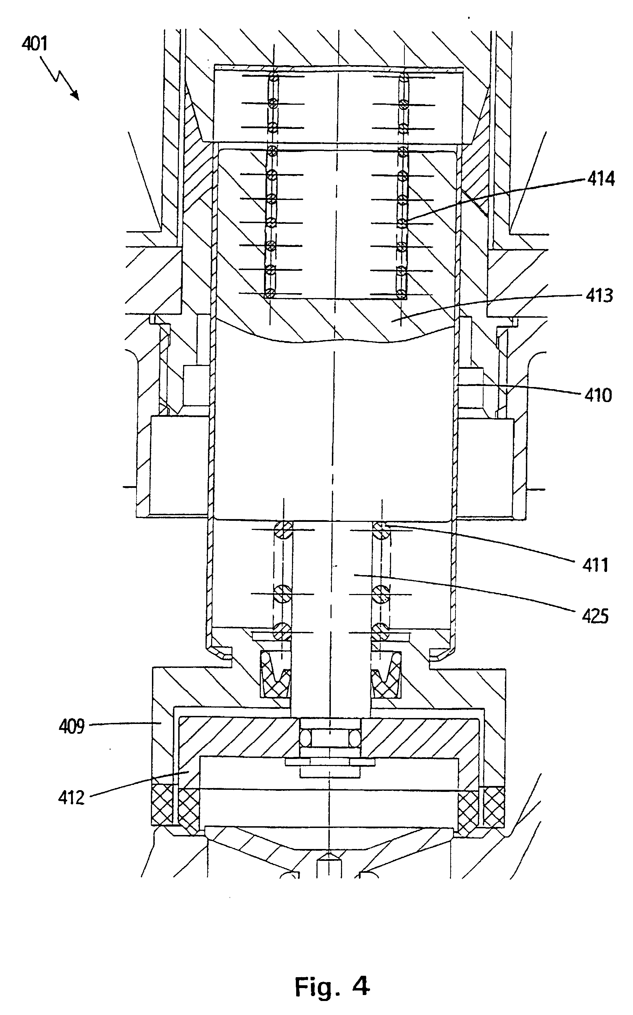

Bei der Ausführungsform des Doppelsicherheitsventils **401** nach Fig. 4 stützt sich die auf dem Führungsabschnitt **425** sitzende äußere Schließfeder **411** für den äußeren Ventilteller **409** an diesem und am Magnetanker **413** ab. Dies bedeutet, daß die innere Schließfeder **414** für den inneren Ventilteller **412** ungefähr doppelt so stark sein muß, da sich die beiden Schließfedern 411, 414 gegenseitig abstützen. Ein Pendeln des äußeren Ventiltellers 409 ist mit dieser Maßnahme besser möglich, und zwar umso besser, je mehr Kraft zentrisch eingeleitet wird.

## Patentansprüche

1. Doppelsicherheitsmagnetventil (401) mit zwei in einem Gehäuse untergebrachten Ventilen, deren beide axial verschiebbaren Ventilteller (409, 412) koaxial zueinander angeordnet sind und jeweils durch eine axiale Bewegung in öffnungsrichtung gegen den Federdruck einer ersten bzw. einer zweiten Schließfeder (411, 414) von ihrem jeweiligen Ventilsitz abheben, wobei die dem in Durchflußrichtung des Doppelsicherheitsmagnetventils (401) zweiten Ventilteller (412) zugeordnete zweite Schließfeder (414) am Gehäuse abgestützt ist und wobei der erste Ventilteller (409) in Öffnungsrichtung mit dem zweiten Ventilteller (412) bewegungsgekoppelt ist, der als Stellelement einen Magnetanker (413) aufweist,
**dadurch gekennzeichnet,**
**daß** die erste Schließfeder (411) am zweiten Ventilteller (412) oder am Magnetanker (413) abgestützt ist und daß der Magnetanker (413) innerhalb eines Führungselements (410) des ersten Ventiltellers (409) axial verschiebbar geführt ist.

2. Doppelsicherheitsmagnetventil nach Anspruch 1, **dadurch gekennzeichnet, daß** der erste Ventilteller (409) auf dem zweiten Ventilteller oder auf dem Magnetanker (413) axial verschiebbar geführt ist.

3. Doppelsicherheitsmagnetventil nach Anspruch 2, **dadurch gekennzeichnet, daß** der erste Ventilteller (409) gegenüber dem zweiten Ventilteller (412) abgedichtet ist.

4. Doppelsicherheitsmagnetventil nach einem der vorhergehenden Ansprüche, **dadurch gekennzeichnet, daß** der erste Ventilteller (409) oder dessen Stellelement den zweiten Ventilteller (412) oder den Magnetanker in Öffnungsrichtung hintergreift.

5. Doppelsicherheitsmagnetventil nach einem der vorhergehenden Ansprüche, **dadurch gekennzeichnet, daß** die zweite Schließfeder (414) in einer in Öffnungsrichtung offenen Öffnung des Magnetankers (413) angeordnet ist.

6. Doppelsicherheitsmagnetventil nach einem der vorhergehenden Ansprüche, **dadurch gekennzeichnet, daß** der erste Ventilteller (409) den zweiten Ventilteller (412) umgibt.

7. Doppelsicherheitsmagnetventil nach Anspruch 6, **dadurch gekennzeichnet, daß** die Ventilsitze der beiden Ventilteller (409, 412) zu einem gemeinsamen Ventilsitz zusammengefaßt sind, der die einzige Ventilöffnung umgibt.

8. Doppelsicherheitsmagnetventil nach einem der vorhergehenden Ansprüche, **dadurch gekennzeichnet, daß** das Gehäuse der beiden Ventilen durch ein Strangpreßprofil oder als Druckgußteil gebildet ist.

## Claims

1. Dual safety solenoid valve (401) with two valves, which are accommodated in a housing and the two axially displaceable valve discs (409, 412) of which are arranged coaxially with respect to one another and rise from their respective valve seat through an axial motion in the opening direction against the spring pressure of a first and a second closing spring (411, 414) respectively, the second closing spring (414), which is assigned to the second valve disc (412) in the direction of flow of the dual safety solenoid valve (401), being supported on the housing, and the first valve disc (409) being coupled in its motion in the opening direction to the second valve disc (412), which has a magnet armature (413) as an actuating element, **characterized in that** the first closing spring (411) is supported on the second valve disc (412) or on the magnet armature (413), and **in that** the magnet armature (413) is guided so as to be axially displaceable within a guide element (410) of the first valve disc (409).

2. Dual safety solenoid valve according to Claim 1, **characterized in that** the first valve disc (409) is guided so as to be axially displaceable on the second valve disc or on the magnet armature (413).

3. Dual safety solenoid valve according to Claim 2, **characterized in that** the first valve disc (409) is sealed off relative to the second valve disc (412).

4. Dual safety solenoid valve according to one of the preceding claims, **characterized in that** the first valve disc (409) or its actuating element reaches behind the second valve disc (412) or the magnet armature in the opening direction.

5. Dual safety solenoid valve according to one of the preceding claims, **characterized in that** the second closing spring (414) is arranged in an opening in the magnet armature (413) which is open in the opening direction.

6. Dual safety solenoid valve according to one of the preceding claims, **characterized in that** the first valve disc (409) surrounds the second valve disc (412).

7. Dual safety solenoid valve according to Claim 6, **characterized in that** the valve seats of the two valve discs (409, 412) are combined into a common valve seat, which surrounds the single valve opening.

8. Dual safety solenoid valve according to one of the preceding claims, **characterized in that** the housing of the two valves is formed by an extruded section or as a die casting.

## Revendications

1. Double valve magnétique de sécurité (401) comportant deux valves logées dans un boîtier, dont les deux têtes de valves (409, 412) à déplacement axial sont agencées coaxialement l'une par rapport à l'autre et se soulèvent chacune de leur siège de valve respectif par un mouvement axial dans le sens de l'ouverture à l'encontre de la pression de ressort d'un premier ressort de fermeture (411) et d'un deuxième ressort de fermeture (414), respectivement, le deuxième ressort de fermeture (414) associé à la deuxième tête de valve (412) dans la direction d'écoulement de la double valve magnétique de sécurité (401) prenant appui sur le boîtier, et la première tête de valve (409) étant accouplée dans son mouvement dans la direction d'ouverture à la deuxième tête de valve (412) qui présente une armature magnétique (413) à titre d'élément de réglage,
**caractérisée en ce que**
le premier ressort de fermeture (411) prend appui sur la deuxième tête de valve (412) ou sur l'armature magnétique (413) et **en ce que** l'armature magnétique (413) est guidée à déplacement axial à l'intérieur d'un élément de guidage (410) de la première tête de valve (409).

2. Double valve magnétique de sécurité selon la revendication 1, **caractérisée en ce que** la première tête de valve (409) est guidée à déplacement axial sur la deuxième tête de valve ou sur l'armature magnétique (413).

3. Double valve magnétique de sécurité selon la revendication 2, **caractérisée en ce que** la première tête de valve (409) est étanchée par rapport à la deuxième tête de valve (412).

4. Double valve magnétique de sécurité selon l'une des revendications précédentes, **caractérisée en ce que** la première tête de valve (409) ou son élément de réglage engage par l'arrière la deuxième tête de valve (412) ou l'armature magnétique dans le sens de l'ouverture.

5. Double valve magnétique de sécurité selon l'une des revendications précédentes, **caractérisée en ce que** le deuxième ressort de fermeture (414) est agencé dans une ouverture de l'armature magnétique (413), qui s'ouvre dans le sens de l'ouverture.

6. Double valve magnétique de sécurité selon l'une des revendications précédentes, **caractérisée en ce que** la première tête de valve (409) entoure la deuxième tête de valve (412).

7. Double valve magnétique de sécurité selon la revendication 6, **caractérisée en ce que** les sièges de valve des deux têtes de valves (409,412) sont réunis en un siège de valve commun qui entoure l'unique ouverture de valve.

8. Double valve magnétique de sécurité selon l'une des revendications précédentes, **caractérisée en ce que** le boîtier des deux valves est formé par un profil extrudé ou sous forme d'une pièce moulée sous pression.
